# EUROPEAN PATENT APPLICATION

(11) **EP 2 637 469 A1**
(43) Date of publication of application: **11.09.2013**
(21) Application number: 13170821.6
(22) Date of filing: 04.02.2009
(51) Int. Cl.: H04W 80/00, H04L 1/18, H04B 7/00

(54) **Method for HARQ buffer operation**

(30) Priority: 04.02.2008 CN 200810033557
(62) Divisional of application: 09711300.5
(71) Applicant: Alcatel Lucent, 75007 Paris (FR)
(72) Inventor: Yang, Tao, 201206 Pudong Jinqiao (CN); Faniuolo, Antonella, 201206 Pudong Jinqiao (CN)
(74) Representative: Dreiss

(57) **Abstract**

Methods for operating HARQ buffer in user equipment of LTE for uplink tranmission. The methods ignore ACK on PHICH and base the HARQ operation on PDCCH signalling. Receiving HARQ ACK on PHICH and keeping HARQ buffer in response to the reception of the HARQ ACK. Flushing the HARQ buffer in the case of receiving no PDCCH message for a predetermined duration. With the methods of the present invention, it is possible to prevent any resource waster due to continuously keep HARQ buffer and to prevent any potential collision in uplink data transmission.

## Description

### FIELD OF THE INVENTION

The present invention relates to wireless communications, and in particular to a method for operating HARQ (Hybrid Automatic Retransmission Request) buffer in LTE (Long-Term Evolution) system, which is capable of optimizing control on HARQ buffer after UE (User Equipment) receives HARQ ACK (HARQ Acknowledgement).

### BACKGROUND OF THE INVENTION

It has been agreed that in a LTE system, a UE needs to keep its HARQ buffer when it only receives HARQ ACK on PHICH (i.e., HARQ feedback indication channal) but no PDCCH message. However, there will be a waste of resource if the UE, whatever happens, continously keeps its HARQ buffer until the maximum retransmission limit is reached. There is thus a need for a method for optimized control of HARQ buffer.

### SUMMARY OF THE INVENTION

An object of the present invention is to provide a method for operating HARQ buffer, which is capable of optimizing control on HARQ buffer after UE receives HARQ ACK.

In an aspect of the present invention, a method for operating HARQ buffer is provided comprising: receiving HARQ ACK; keeping HARQ buffer in response to the reception of the HARQ ACK; and flushing the HARQ buffer in the case of receiving no PDCCH (Physical Downlink Control Channel) message for a predetermined duration.

In a further aspect of the present invention, a method for operating HARQ buffer is provided comprising: receiving HARQ ACK from an eNodeB (envolved Node B); keeping HARQ buffer in response to the reception of the HARQ ACK; transmitting from the eNode B to a UE a PDCCH message for new transmission, if no expected new transmission is detected for a predetermined duration; and flushing the HARQ buffer in response to the reception of the PDCCH message.

Preferably, the method further comprises performing a new transmission by the UE based on the received PDCCH message.

In a still further aspect of the present invention, a method for operating HARQ buffer is provided comprising: receiving HARQ ACK from an eNodeB (envolved Node B); keeping HARQ buffer in response to the reception of the HARQ ACK; transmitting from the eNode B to a UE a PDCCH message for retransmission, if no expected retransmission is detected for a predetermined duration; and performing retransmission in response to the reception of the PDCCH message.

Preferably, the method further comprises keeping the HARQ buffer until maximum retransmission limit is reached.

Preferably, the HARQ ACK is caused by error occuring in the HARQ NACK from the eNode B at the UE side.

With the method of the present invention, it is possible to prevent any resource waster due to continuously keep HARQ buffer and to prevent any potential collision in uplink data transmission.

### BRIEF DESCRIPTION OF THE DRAWINGS

The above and other objects, features and advantages of the present invention will be more apparent from the following description of preferred embodiments with reference to the drawings, in which:
Fig. 1 shows the operation process of eNode B and UE in a first scenario according to an embodiment of the present invention;
Fig. 2 shows the operation process of eNode B and UE in a second scenario according to an embodiment of the present invention;
Fig. 3 shows the operation process of eNode B and UE in a third scenario according to an embodiment of the present invention; and
Fig. 4 shows the operation process of eNode B and UE in a fourth scenario according to an embodiment of the present invention.

### DETAILED DESCRIPTION OF THE PREFERRED EMBODIMENTS

A detailed description of preferred embodiments of the present invention will be given below in conjunction with the drawings. In the description, any detail and function unnecessary to the present invention are omitted so that the above objects, features and advantages of the present invention will not be obscured.

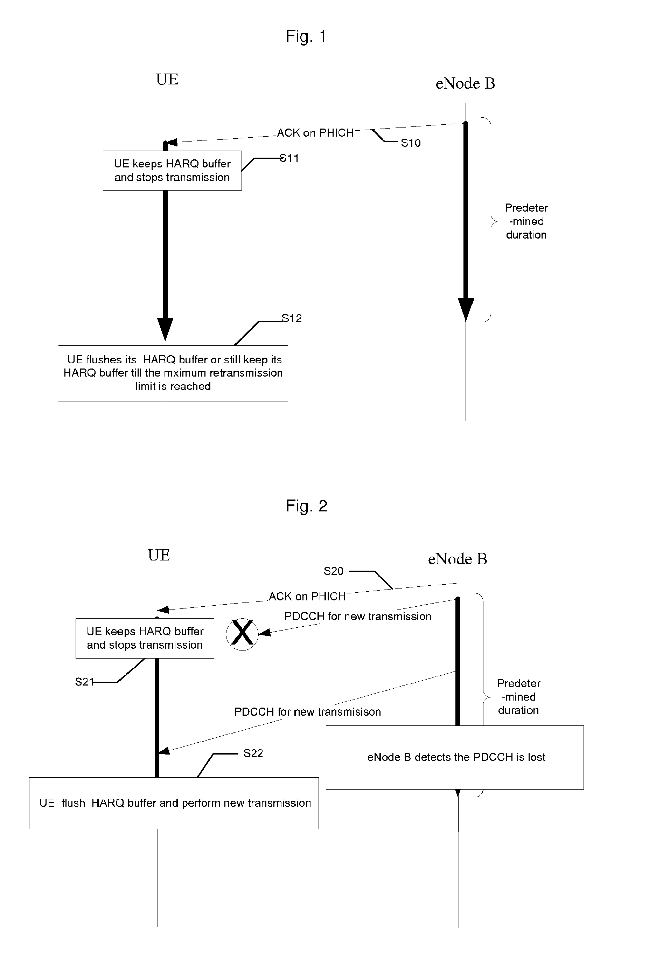

Fig. 1 shows the operation process of eNode B and UE in a first scenario according to an embodiment of the present invention. As shown in the figure, in the first scenario, the eNode B transmits only ACK message over PHICH, but transmits no PDCCH message, i.e., control command, to the current UE.

At step S10, the eNode B transmits HARQ ACK to the UE over PHICH. At step S11, in response to the reception of the HARQ ACK, the UE keeps its HARQ buffer and stops its own transmission. Then, the UE monitors PDCCH message, i.e., it determines whether any PDCCH message is received within a predetermined duration. Since no PDCCH message is sent to the UE, the UE receives no PDCCH message within the predetermined duration. At step S12, the UE flush its HARQ buffer. Alternatively, the UE may keep its HARQ buffer till maximum retransmission limit is reached or till a PDCCH message is received.

Fig. 2 shows the operation process of eNode B and UE in a second scenario according to an embodiment of the present invention. In the second scenario, the eNode B transmits to the UE not only HARQ ACK message over PHICH but also a PDCCH message for new transmission; however, the PDCCH message is lost at the UE side.

At step S20, the eNode B transmits to the UE HARQ ACK over PHICH as well as a PDCCH message for new data transmission. At step S21, the UE keeps its HARQ buffer and stops its own transmission, because the PDCCH message is lost.

Due to the PDCCH message being lost, the eNode B cannot detect any new transmission on the scheduled resource for a predetermined time period. Then, the eNode B is aware of the fact that the PDCCH message has been lost. At this point, the eNode B transmits to the UE again a PDCCH message for new data transmission.

At step S22, when the UE has detected the PDCCH message for new transmission, it flushes its HARQ buffer and performs the new transmission.

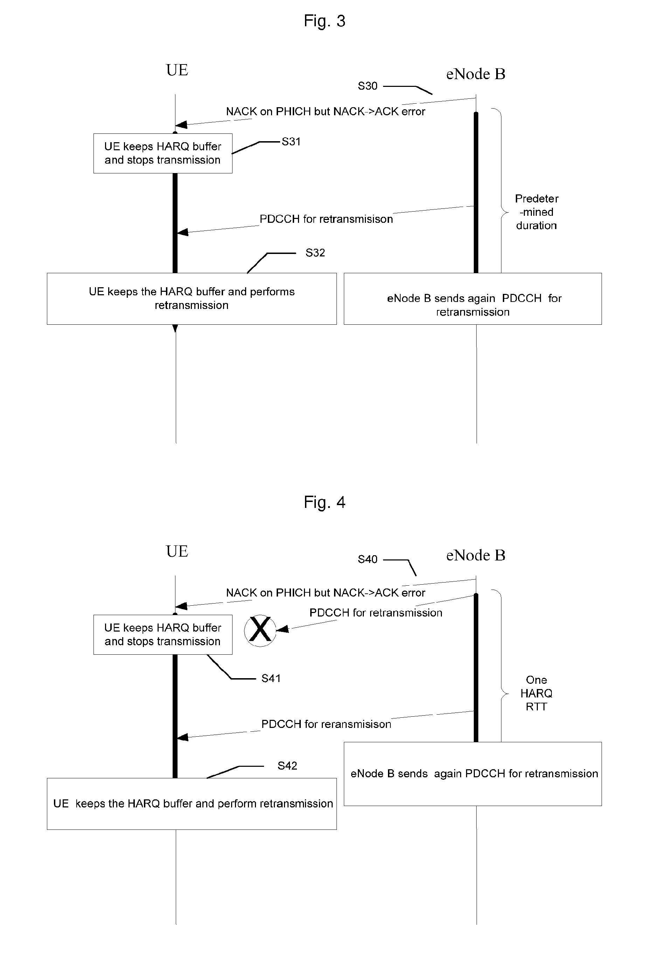

Fig. 3 shows the operation process of eNode B and UE in a third scenario according to an embodiment of the present invention. In the third scenario, the eNodeB transmits to the UE a HARQ ACK message for non-adaptive retransmission; however, a NACK->ACK error happens at the UE side.

At step S30, the eNode B transmits to the UE a HARQ ACK message for non-adaptive retransmission; however, during the transmission, a NACK->ACK error happens at the UE side, and thus the UE will receive a HARQ ACK message.

At step S31, in response to the reception of the HARQ ACK, the UE keeps its HARQ buffer and stops its own transmission.

No retransmission will be performed since the UE receives no HARQ NACK for a predetermined time period. In other words, the eNode B does not receive any expected retransmission data over a predetermined time period. At this point, the eNode B is aware of the fact that a NACK->ACK error happens at the UE side, and retransmits a PDCCH message indicating retransmission.

At step S32, if the UE receives the PDCCH message for retransmission, it performs retransmission based on the just received PDCCH message.

Fig. 4 shows the operation process of eNode B and UE in a fourth scenario according to an embodiment of the present invention. In the fourth scenario, the eNode B transmits to the UE a HARQ ACK message as well as a PDCCH message for adaptive retransmission; however, at the UE side, a NACK->ACK error happens and the PDCCH message is lost.

At step S40, the eNode B transmits to the UE a HARQ ACK message as well as a PDCCH message for adaptive retransmission; however, at the UE side, a NACK->ACK error happens and the PDCCH message is lost. That is, the UE will receive only an erroneous HARQ ACK message.

At step S41, in response to the reception of the erroneous ACK message, the UE keeps its HARQ buffer and stops its transmission.

Since the eNode B detects no expected retransmission on the scheduled resource for a predetermined duration, the eNode B becomes aware of the fact that the PDCCH has been lost and the NACK->ACK error has happened.

At step S42, the eNode B transmits to the UE again a PDCCH message for retransmission.

At step S43, upon receiving the PDCCH message, the UE performs relevant retransmission based on the received PDCCH message.

The present invention has been disclosed above with the preferred embodiments. Those skilled in the art can make various variations, replacements and additions to the present invention within the scope of the present invention. Therefore, the scope of the present invention is not limited to the above specific embodiments, but should be defined by the appended claims.

## Claims

1. A method for operating HARQ buffer comprising:
receiving HARQ ACK from an eNodeB; keeping HARQ buffer in response to the reception of the HARQ ACK;
transmitting from the eNodeB to a UE a PDCCH message for new transmission, if no expected new transmission is detected for a predetermined duration; and flushing the HARQ buffer in response to the reception of the PDCCH message.

2. The method of claim 1, further comprising: performing a new transmission by the UE based on the received PDCCH message.

3. A method for operating HARQ buffer comprising:
receiving HARQ ACK from an eNodeB; keeping HARQ buffer in response to the reception of the HARQ ACK;
transmitting from the eNodeB to a UE a PDCCH message for retransmission, if no expected retransmission is detected for a predetermined duration; and performing retransmission in response to the reception of the PDCCH message.

4. The method of claim 3, wherein said HARQ ACK is caused by, at the UE side, an error occurring in the HARQ NACK from the eNodeB.
